# EUROPÄISCHE PATENTSCHRIFT

(11) **EP 1 633 580 B1**
(45) Veröffentlichungstag und Bekanntmachung des Hinweises auf die Patenterteilung: **11.08.2010**
(21) Anmeldenummer: 04728120.9
(22) Anmeldetag: 17.04.2004
(51) Int. Cl.: B60C 19/00, H01Q 1/22

(54) **REIFEN MIT TRANSPONDER**
TYRE WITH TRANSPONDER
PNEU AVEC TRANSPONDEUR

(30) Priorität: 05.06.2003 DE 10325423
(43) Veröffentlichungstag der Anmeldung: 15.03.2006
(73) Patentinhaber: Continental Reifen Deutschland GmbH, 30165 Hannover (DE)
(72) Erfinder: LEHMANN, Jörg, DE/ 30453 Hannover (DE); DOERR, Alfons, 70597 Stuttgart-Degerloch (DE); GRÜNBERG, Heiko, 31303 Burgdorf (DE)
(74) Vertreter: Finger, Karsten
(86) Internationale Anmeldenummer: PCT/EP2004/004110
(87) Internationale Veröffentlichungsnummer: WO 2004/108439

(56) Entgegenhaltungen:
- EP-A- 0 936 089
- WO-A-00/47430
- WO-A-01/25034
- WO-A-03/070496
- US-B1- 6 217 683

## Beschreibung

Die Erfindung betrifft einen Transponder, der an einem Reifen angebracht ist, wobei der Transponder zumindestens einen Transponder-Chip sowie eine Transponder-Antenne umfasst und in ein Substrat eingebettet ist, und das Substrat über ein Mittel mit einer Reifeninnenseite in Verbindung steht.

Transponder werden im Reifen für verschiedene Aufgaben eingesetzt. Hierzu zählt insbesondere eine Reifenidentifikation, mit der ein Automobilhersteller u. a. schnell sowie automatisiert feststellen kann, aus welchem Reifenwerk ein bestimmter Reifen geliefert wurde. Andere Aufgaben können eine Luftdrucküberwachung, eine Temperatumiessung, die Messung von mechanischen Spannungszuständen im Reifen oder eine Messung der zurückgelegten Laufleistung des Reifens umfassen. Moderne Transponder bestehen aus einem Elektronikbauteil bzw. -Chip, in dem Sensorelemente angeordnet sein können sowie aus einer an dieses Elektronikbauteil angeschlossenen Antenne.

Ein Problem bei Reifentranspondem ist mit der Anordnung des Transponders im Reifen verbunden. Die DE 44 26 022 C1 zeigt beispielsweise einen Transponder, der in einem sogenannten Container angeordnet ist, der wiederum fest an die Reifeninnenseite geklebt wird. Sowohl der Container, der die Funktion eines Gehäuses hat, als auch die zwischen Transponder und Reifeninnenseite liegende steifere Trägerschicht sind fest mit dem Transponder verbunden. Ein wesentlicher Nachteil dieser Verbundanordnung besteht darin, dass im Betriebszustand des Reifens durch die auftretenden Deformationen hohe Beanspruchungen auf den Transponder übertragen werden, die entweder zur Beschädigung der Transponder-Antenne oder zum Bruch der Verbindungsstelle zwischen Transponder-Chip und Transponderantenne führen. Der Transponder kann dann durch die irreversiblen Beschädigungen nicht mehr zur Datenübertragung eingesetzt werden. Ein weiterer Nachteil ist darin zu sehen, dass die stoffschlüssig mit der Reifeninnenseite verbundenen Transponder nicht ohne weiteres wieder demontiert oder bei einem elektrischen Defekt ersetzt werden können. Bei der Demontage bzw. beim Austausch von solchen Transpondern würde die Innenschicht der Reifeninnenseite unwiederbringlich verletzt und dadurch der Reifen zerstört werden.

Das Dokument US-A-6 217 683 offenbart einen Reifen mit einem Transponder, gemäss dem Oberbegriff des Anspruchs 1.

Der Erfindung liegt die Aufgabe zugrunde, einen Transponder zum Einbau in einen Reifen bereitzustellen, der eine möglichst hohe Dauerfestkeit besitzt und einfach montierbar ist.

Gelöst wird die Aufgabe gemäß den kennzeichnenden Merkmalen von Anspruch 1.

Ein Vorteil der Erfindung ist insbesondere darin zu sehen, dass durch die erfindungsgemäße Verbindungsform die auf den Transponder und das Substrat einwirkenden Beanspruchungen wesentlich reduziert werden. Bei dieser erfindungsgemäßen Anordnung wird sowohl der Anteil der auf den Transponder übertragenen Schubspannungen und Normalspannungen vernachlässigbar klein. Diese Wirkung gilt ebenso für die Biegewechselbeanspruchung, die im Betriebszustand des Reifens auf den Transponder einwirkt und durch die erzielte Entkopplung erheblich reduziert wird. Der Transponder besitzt dadurch insgesamt eine bedeutend höhere Dauerfestigkeit. Ein weiterer bedeutender Vorteil ist die einfache Nachrüstbarkeit des Reifens mit einem Transponder. Bei der Reifenkonfektion können alle Reifen vorsorglich mit dem erfindungsgemäßen Materialstreifen versehen werden. Erst bei der Auslieferung des fertig konfektionierten Reifens an den jeweiligen Kunden kann dann entschieden werden, ob der Reifen mit einem Transponder ausgerüstet werden soll. Anschließend lässt sich der Transponder auf eine einfache Weise mit dem Materialstreifen am Reifen befestigen.

In der Erfindung ist vorgesehen, dass der Materialstreifen über eine Substratöffnung mit dem Substrat verbunden ist. Dadurch lässt sich der im Substrat eingebettete Transponder auf eine einfache Art und Weise mit dem Materialstreifen verbinden.

Des weiteren ist vorgesehen, dass das Substrat ein zur Befestigung des Materialstreifens herausragendes Fixierungsmittel aufweist. Das Fixierungsmittel besitzt die Funktion, den Materialstreifen am Substrat zu fixieren und lässt sich einfach herstellen.

Außerdem ist vorgesehen, dass der Materialstreifen eine Materialstreifenöffnung aufweist, mit der der Materialstreifen am Fixierungsmittel des Substrates fixiert wird. Die Materialstreifenöffnung am Materialstreifen lässt sich durch ein einfaches Ausstanzen herstellen.

Des weiteren ist vorgesehen, dass der Materialstreifen aus einem Kautschukprodukt besteht. Auf diese Weise wird der im Substrat eingebettete Transponder mit einem leichten Druck gegen die Reifeninnenseite gedrückt.

In einer vorteilhaften Weiterbildung der Erfindung ist vorgesehen, dass die Substratöffnung rechteckförmig ist und abgerundete oder abgeflachte Kanten aufweist. Durch die so gebildeten weichen Übergänge wird die Dauerfestigkeit des Materialstreifens erhöht.

In einer weiteren vorteilhaften Weiterbildung der Erfindung ist vorgesehen, dass das Substrat ausschließlich auf dem Materialstreifen anliegt. Dadurch wird die Innenschicht der Reifeninnenseite vor Beschädigungen geschützt.

In einer weiteren vorteilhaften Weiterbildung der Erfindung ist vorgesehen, dass das Substrat auf der zur Reifeninnenseite gerichteten Seite eine abgerundete Form aufweist. Durch die abgerundete Form berührt der im Substrat eingebettete Transponder die Reifeninnenseite beim Latschdurchlauf nur in einem kleinen Teilbereich.

In einer weiteren vorteilhaften Weiterbildung der Erfindung ist vorgesehen, dass der Materialstreifen vor der Reifenvulkanisation auf der Reifeninnenseite angebracht wird. Auf diese Weise kann das Anbringen des Materialstreifens auf eine einfache Weise direkt beim Reifenaufbau auf der Reifenaufbautrommel erfolgen.

In einer weiteren vorteilhaften Weiterbildung der Erfindung ist vorgesehen, dass der Materialstreifen nach der Reifenvulkanisation durch eine Kaltvulkanisation auf der Reifeninnenseite des fertig konfektionierten Reifens angebracht wird. Die Kaltvulkanisation ermöglicht ein einfaches Nachrüsten eines fertig konfektionierten Reifens mit dem erfindungsgemäßen Materialstreifen.

Anhand mehrerer Ausführungsbeispiele soll die Erfindung näher erläutert werden. Es zeigen:
- Fig. 1:: eine erfindungsgemäße Anordnung des im Substrat eingebetteten Transponder mit dem Materialstreifen in der Seitenansicht
- Fig. 2:: einen in ein Substrat eingebetteten Transponder in der Aufsicht
- Fig. 3:: einen erfindungsgemäßen Materialstreifen in der Aufsicht, und
- Fig. 4:: ein weiteres Ausführungsbeispiel für einen auf der Reifeninnenseite angeordneten Materialstreifen.

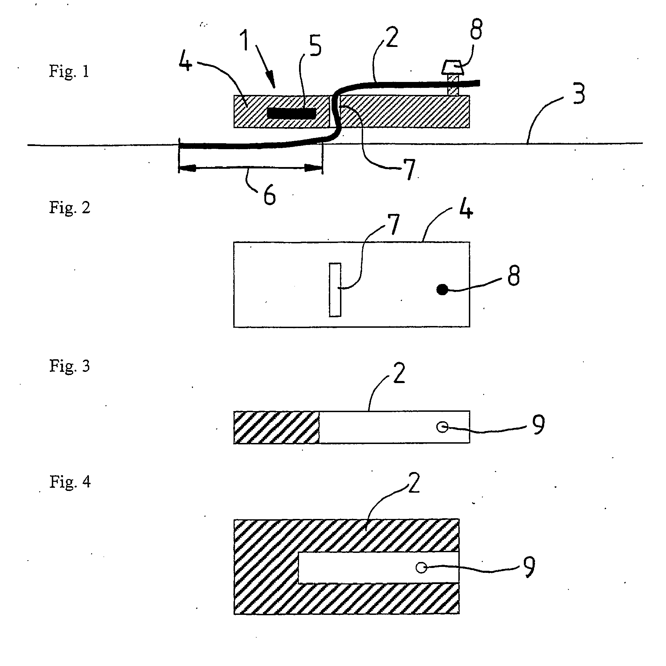

Figur 1 zeigt einen auf einer Reifeninnenseite 3 angeordneten in ein Substrat 4 eingebetteten Transponder 1. Der Transponder 1 setzt sich aus einem Transponder-Chip 5 und einer in der Figur nicht dargestellten Antennenspule zusammen, die in ein Substrat 4 eingebettet sind. Das Substrat 4, welches die Funktion eines Gehäuses besitzt, kann sich beispielsweise aus Epoxid-Harz, einem Kunststoff, Gummi oder einem Elastomer zusammensetzen. Es handelt sich bei der Figur um eine Querschnittsseitenansicht. Der Materialstreifen 2 ist nur im Teilbereich 6 mit der Reifeninnenseite 3 fest verbunden. Beispielsweise dadurch, dass der Materialstreifen 2 bei der Reifenkonfektion in diesem Teilbereich 6 mit der Reifeninnenseite 3 vulkanisiert und dabei in die Reifeninnenseite 3 hineingedrückt wird. Der überstehende restliche Teil des Materialstreifens 2 würde hingegen zwischen dem Materialstreifen 2 und der Reifeninnenseite 3 mit einer geeigneten Folie abgedeckt werden, um in diesem Teil eine stoffschlüssige Verbindung zur Reifeninnenseite 3 zu unterbinden. Nach der Reifenkonfektion wird der Transponder 1 mit dem umgebenden Substrat 4 mit dem freien Ende des Materialstreifens 2 verbunden. Hierzu wird das freie Ende des Materialstreifens 2 durch die Substratöffnung 7 gezogen und anschließend am hervorstehenden Fixierungsmittel 8 des Substrates 4 befestigt. Der Materialstreifen 2 besteht aus einem Kautschukprodukt-Material, wodurch es elastische Eigenschaften besitzt und dadurch den im Substrat 4 eingebetteten Transponder 1 mit einer leichten Spannung gegen die Reifeninnenseite 3 drückt. Das Fixierungsmittel 8 ist so ausgebildet, dass sich das freie Ende des Materialstreifens 2 nicht eigenständig ablösen kann, beispielsweise durch eine knopfartige Form. Die Öffnung 7 kann statt den rechtwinkligen Kanten abgerundete oder schräg verlaufende Kanten aufweisen, wodurch der Materialstreifen 2 besser am Substrat 4 anliegt und die Dauerhaltbarkeit des Materialstreifens 2 gesteigert wird.

Die Figur 2 zeigt den im Substrat 4 eingebetteten Transponder in der Aufsicht. Die Substratöffnung 7 für den Materialstreifen ist im Wesentlichen rechteckförmig und das Fixierungsmittel 8 vorzugsweise kreisförmig.

Die Figur 3 zeigt den erfindungsgemäßen Materialstreifen ohne Transponder in der Aufsicht. Der Materialstreifen 2 ist nur im schraffierten Bereich fest mit der Reifeninnenseite verbunden. Die kreisförmige Öffnung ist die Materialstreifenöffnung 9 zur Befestigung am Fixierungsmittel des Substrates.

Die Figur 4 zeigt ein weiteres Ausführungsbeispiel eines erfindungsgemäßen Materialstreifens 2 ohne Transponder in der Aufsicht. Bei diesem Ausführungsbeispiel besitzt der Materialstreifen in etwa die Abmessung des Substrates 4, wobei wiederum nur der schraffierte Teil mit der Reifeninnenseite fest verbunden ist. Das den Transponder umgebende Substrat tritt bei diesem Ausführungsbeispiel nicht in Kontakt mit der Reifeninnenseite, wodurch die Reifeninnenseite zusätzlich vor Beschädigungen geschützt wird.

### Bezugszeichenliste

### (ist Teil der Beschreibung)

- 1: Transponder
- 2: Materialstreifen
- 3: Reifeninnenseite
- 4: Substrat
- 5: Transponder-Chip
- 6: Teilbereich in dem der Materialstreifen mit der Reifeninnenseite fest verbunden ist
- 7: Substratöffnung
- 8: Fixierungsmittel am Substrat
- 9: Materialstreifenöffnung

## Patentansprüche

1. Reifen mit Transponder, wobei der Transponder
- zumindestens einen Transponder-Chip (5) sowie eine Transponder-Antenne umfasst und in ein Substrat (4) eingebettet ist,
- das Substrat (4) über ein Verbindungsmittel mit einer Reifeninnenseite (3) in Verbindung steht, und
- das Substrat (4) lösbar mit dem Verbindungsmittel verbunden ist,
- wobei das Verbindungsmittel ein nur in mindestens einem Teilbereich (6) des Verbindungsmittels mit der Reifeninnenseite (3) fest verbundener Materialstreifen (2) ist,
- wobei der Materialstreifen (2) über eine Substratöffnung (7) mit dem Substrat (4) verbunden ist, **dadurch gekennzeichnet, dass**
- das Substrat (4) ein zur Befestigung des Materialstreifens (2) herausragendes Fixierungsmittel (8) aufweist, dass
- der Materialstreifen (2) eine Materialstreifenöffnung (9) aufweist, mit der der Materialstreifen (2) am Fixierungsmittel (8) des Substrates (4) fixiert wird, und
- der Materialstreifen (2) aus einem Kautschukprodukt besteht.

2. Reifen nach Anspruch 1,
**dadurch gekennzeichnet, dass**
die Substratöffnung (7) rechteckförmig ist und abgerundete oder abgeflachte Kanten aufweist.

3. Reifen nach einem der Ansprüche 1 bis 2,
**dadurch gekennzeichnet, dass**
das Substrat (4) ausschließlich auf dem Materialstreifen (2) anliegt.

4. Reifen nach einem der Ansprüche 1 bis 3,
**dadurch gekennzeichnet, dass**
das das Substrat (4) auf der zur Reifeninnenseite (3) gerichteten Seite eine abgerundete Form aufweist.

5. Reifen nach einem der Ansprüche 1 bis 4,
**dadurch gekennzeichnet, dass**
der Materialstreifen (2) vor der Reifenvulkanisation auf der Reifeninnenseite (3) angebracht wird.

6. Reifen nach einem der Ansprüche 1 bis 5,
**dadurch gekennzeichnet, dass**
der Materialstreifen (2) nach der Reifenvulkanisation durch eine Kaltvulkanisation auf der Reifeninnenseite (3) des fertig konfektionierten Reifens angebracht wird.

## Claims

1. Tyre with a transponder, the transponder
- comprising at least one transponder chip (5) and a transponder antenna and being embedded in a substrate (4),
- the substrate (4) being in connection with an inner side (3) of the tyre by a connecting means, and
- the substrate (4) being detachably connected to the connecting means,
- the connecting means being a strip of material (2) which is securely connected to the inner side (3) of the tyre only in at least one subregion (6) of the connecting means,
- the strip of material (2) being connected to the substrate (4) via an opening (7) in the substrate, being, **characterized in that** the substrate (4) has a protruding fixing means (8) for the fastening of the strip of material (2), **in that**
- the strip of material (2) has an opening (9) in the strip of material, by which the strip of material (2) is fixed to the fixing means (8) of the substrate (4), and **in that** the strip of material (2) consists of a rubber product.

2. Tyre according to Claim 1, **characterized in that** the opening (7) in the substrate is rectangular and has rounded or flattened edges.

3. Tyre according to one of Claims 1 or 2, **characterized in that** the substrate (4) lies exclusively on the strip of material (2).

4. Tyre according to one of Claims 1 to 3, **characterized in that** the substrate has a rounded form on the side directed towards the inner side (3) of the tyre.

5. Tyre according to one of Claims 1 to 4, **characterized in that** the strip of material (2) is attached on the inner side (3) of the tyre before the tyre is vulcanized.

6. Tyre according to one of Claims 1 to 5, **characterized in that** the strip of material (2) is attached after the tyre is vulcanized by cold vulcanization on the inner side (3) of the tyre of the ready manufactured tyre.

## Revendications

1. Bandage pour roue de véhicule doté d'un transpondeur,
le transpondeur présentant au moins une puce (5) de transpondeur ainsi qu'une antenne de transpondeur et étant incorporé dans un substrat (4),
le substrat (4) étant relié au côté intérieur (3) du bandage roue par l'intermédiaire d'un moyen de liaison et
le substrat (4) étant relié de manière libérable au moyen de liaison,
le moyen de liaison étant une bande de matière (2) reliée solidairement au côté intérieur (3) du bandage de roue uniquement dans au moins une partie (6) du moyen de liaison,
la bande de matière (2) étant reliée au substrat (4) par l'intermédiaire d'une ouverture (7) ménagée dans le substrat,
**caractérisé en ce que**
le substrat (4) présente un moyen de fixation (8) en débord qui fixe le ruban de matière (2),
**en ce que** le ruban de matière (2) présente une ouverture (9) par laquelle le ruban de matière (2) est fixé sur le moyen de fixation (8) du substrat (4) et
**en ce que** le ruban de matière (2) est constitué d'un produit de caoutchouc.

2. Bandage pour roue de véhicule selon la revendication 1, **caractérisé en ce que** l'ouverture (7) ménagée dans le substrat a une forme rectangulaire à arêtes arrondies ou aplaties.

3. Bandage pour roue de véhicule selon l'une des revendications 1 et 2, **caractérisé en ce que** le substrat (4) repose exclusivement sur le ruban de matière (2).

4. Bandage pour roue de véhicule selon l'une des revendications 1 à 3, **caractérisé en ce que** le côté du substrat (4) orienté vers le côté intérieur (3) du bandage de roue présente une forme arrondie.

5. Bandage pour roue de véhicule selon l'une des revendications 1 à 4, **caractérisé en de que** le ruban de matière (2) est appliqué sur le côté intérieur (3) du bandage de roue avant la vulcanisation du bandage de roue.

6. Bandage pour roue de véhicule selon l'une des revendications 1 à 5, **caractérisé en ce que** le ruban de matière (2) est appliqué par vulcanisation à froid sur le côté intérieur (3) du bandage de roue confectionné et terminé après la vulcanisation du bandage de roue.
